# EUROPEAN PATENT SPECIFICATION

(11) **EP 2 994 279 B1**
(45) Date of publication and mention of the grant of the patent: **15.11.2023**
(21) Application number: 14794748.5
(22) Date of filing: 05.05.2014
(51) Int. Cl.: B27N 1/02, B29B 7/42, C08J 3/215, C08L 97/02, B29B 7/38, B29B 7/60, B29B 7/84, B29B 7/90, C08L 1/02, B29C 48/285, B29C 48/76

(54) **METHOD FOR THE MANUFACTURING OF COMPOSITE MATERIAL**
VERFAHREN ZUR HERSTELLUNG EINES VERBUNDMATERIALS
PROCÉDÉ POUR LA FABRICATION D'UN MATÉRIAU COMPOSITE

(30) Priority: 08.05.2013 FI 20135482
(43) Date of publication of application: 16.03.2016
(73) Proprietor: Elastopoli OY, 38210 Sastamala (FI)
(72) Inventor: NIKKILÄ, Markku, FI-36110 Ruutana (FI); TURE, Timo, FI-33610 Tampere (FI)
(74) Representative: Kangasmäki, Reijo Holger
(86) International application number: PCT/FI2014/050326
(87) International publication number: WO 2014/181036

(56) References cited:
- EP-A1- 1 604 732
- EP-A1- 2 028 235
- EP-A1- 2 537 891
- WO-A1-97/30838
- WO-A1-2006/055398
- WO-A1-2010/134208
- US-B1- 6 479 002
- DATABASE WPI Week199847, Derwent Publications Ltd., London, GB; AN 1998-550440, XP055291609 'PELLET MANUFACTURING DEVICE - HAS SCREW TYPE KNEADING EXTRUDER AND SCREW TYPE SIDE FEEDER' & JP H10 244 534 A (JAPAN STEEL WORKS LTD) 14 September 1998
- DATABASE WPI Week201035, Derwent Publications Ltd., London, GB; AN 2010-F09672, XP055291618 'MANUFACTURE OF FUNCTIONAL CELLULOSE COMPOSITION FOR E.G. FILTER AID, INVOLVES KNEADING AQUEOUS SLURRY CONTAINING CELLULOSE FIBER AND FUNCTIONAL COMPOUND AND HEAT-DRYING SPECIFIED TEMPERATURE' & JP 2010 106055 A (TORAY INDUSTRIES) 13 May 2010
- DATABASE WPI Week 200349, Derwent Publications Ltd., London, GB; AN 2003-515913, XP055291626 'REPRODUCIBLE WOODEN TYPE MOLDING MANUFACTURING METHOD INVOLVES ADDING WATER IN MIXTURE OF POLYPROPYLENE CHIPS, WOOD WASTE, FIBER OR PLASTIC CHIPS DURING GRANULATION FOR FOAMING MIXTURE AT MELT EXTRUSION PERIOD' & JP 2002 187115 A (NEGORO SANGYO CO) 02 July 2002

## Description

The current invention relates to a method for the manufacturing of composite material according to independent claim 1.

New kinds of wood based products have been developed alongside with traditional products of the forest industry, as an example of such new products may be mentioned different kinds of wood composite products, wherein wood based materials have been combined with plastic based materials. Wood composite is nowadays used e.g. in building and furniture industry by utilizing e.g. extrusion or injection molding.

Furthermore, from the field of forest industry it is known to utilize different kinds of web formation methods and apparatuses, such as for e.g. manufacturing and drying of paper and cellulose web. Nowadays it is also known to form a web e.g. by wet web formation, in which from a raw material is formed a liquid suspension, which is led as an even layer from a head box or the equivalent to a web forming section, such as e.g. on a wire. These methods may also be used for manufacturing of a composite material. Then the mixture may include natural fiber, plastic powder or fiber. Thereafter, water is removed from the web typically by mechanically pressing the same and/or drying it by heat with drying trundles and/or a so called Yankee cylinder.

Furthermore it is known to manufacture wood- and natural fiber based plastic mixtures by melt-mixing them together e.g. by utilizing an extrusion method. In this case, e.g. plastic, dry wood or natural fiber material and compatibility improving agents are mixed together at a high temperature in which the plastic materials are in a molten state. Dry wood and natural fiber materials are, when dry, strongly hydrogen bonded and hornified, which is why these bonds may not be opened and fibrillized in the "dry process". Therefore, the reactive surface area on the surface of the fiber remains low and the effect of the compatibilizing agents remains low, and in further processing the products easily reagglomerate.

Especially in patent US 2012/0090800 is disclosed a composite intermediate, a method for manufacturing the same and a new use of the composite intermediate. The solution in question is based on a web-like composite intermediate, which is formed from natural fibers and plastic. In this context, the composite intermediate is formed by wet web formation from a substantially homogeneous liquid mixture that contains natural fibers, plastic particles having a diameter of less than ~1000 µm, and an agent that improves compatibility between natural fibers and plastic particles. Liquid is removed from the wet web formed in connection with the wet web formation according to this publication in order to manufacture the composite material into e.g. an intermediate to be stored on a roll or by using the intermediate in manufacturing an end product after the intermediate has been crushed.

The homogeneous compatibilization of the web, which means improved compatibility between natural fibers and plastic, prevents excessive formation of hydrogen bonds in between natural fibers and provides a strong and homogeneous structure for the composite intermediate. The compatibilization improving agent and small plastic particles are obtained evenly in the gaps of the natural fiber network by wet web formation, whereupon the coupling agents are active and the adhesion between natural fibers and plastic particles works well in further processing of the intermediate e.g. when higher temperatures are used in the manufacturing of an end product. In practice, it has been noticed that a part of the plastic powder fed into the process gets loose from the web during the process and scatters on the floor or into the paper machine apparatuses thus causing stoppages of operation. In addition there have been quality problems, need for expensive cleaning procedures and a decrease in the manufacturing capacity of the process.

However, in practical processes there are compositions and conditions wherein the above mentioned wet web formation is not suitable, such as e.g. when the cellulose web containing plastic or other needed chemicals is too weak to carry its own weight, due to which it cannot be dried by traditional methods known from paper machines, such as mechanical and/or heating-based drying arrangements used in connection with traditional manufacturing processes based on wet web formation. The reason for a weak cellulose web formation may be e.g. too small an amount of cellulose in the mixture, when the limit may be e.g. about 20-40 % depending on the quality and the grinding degree of the cellulose. Another reason may also be too small reactivity of the cellulose fiber used, which may be due to e.g. debonding, hydrophobization or another chemical modification, in which the OH groups of the cellulose fiber are terminated and their ability to form bonds with cellulose stops or weakens. Plastic fibers on their part are unable to form a web by chemical bonding, which is the case also with viscose fibers or other so called "man-made" celluloses.

Furthermore, from patent JP 2002187115 a method is known, which method is based on use of recycled plastic, recycled textile and wood powder mixed with the above mentioned. In this method, 2-40 % of water is added to a mixture made of the previously listed ingreclients in order to achieve a porous manufactured product. In this context, the porosity caused by water is used as an advantage in order to make the end product lighter, when, however, the result is an end product that has weak mechanical properties. The purpose of the recycled textile material used in this context is to function as the binding part of the structure, because with the mixture described above it is not possible to achieve an internal chemical web structure that binds the composite material.

From patent GB 896117 for its part is known a method with which the use of a paper machine or a cardboard machine is enabled in order to manufacture a web on top of a sieve, when the web to be manufactured is being pressed tight after drying. This method is based on that that the chemically soluble polymer powders are engorged with the aid of softener/swelling agents, wherein the surface of the polymer becomes sticky. After this, the sticky polymers and the water-fiber mixture are mixed, after which the sticky polymers and the fibers are made to grab each other by lowering the pH of the mixture. Thereafter, from the mixture created, a web is formed, which is dried and calendered causing the swelling agents to diffuse into the structure and the stickiness of the manufactured web to dissipate.

This method is based on the manufactured web carrying itself, which is why in such a method different kinds of solvents, softeners or other like chemicals need to be used, which have to be removed from the manufactured web later on. Therefore, the method is not on the level of environmental friendliness that is required from technique today.

Furthermore, document WO 97/30838 discloses a method for making a composite of thermoplastic polymer and cellulose fibers, wherein the method includes mixing fibers, polymer and a combatibilizer or "interfacial agent" in a mixer, and extruding the mix in an extruder provided with a degassing vent and having a lower pitch in a compression zone with respect to a feed and venting zone, wherein the mix is sheared under high pressure in the feed and compression zones in a first phase, and degassed by the vent in a second phase, With this kind of a method it is not possible to carry out an extrusion process with a mixture having a high (> 40 %) water content in order to produce material having a satisfactory quality in practice.

Publication WO 2006/055398 discloses an apparatus comprising a pre-extruder that corresponds to a mixer and a main extruder that has a degassing vent and a lower pitch in the compression zone with respect to the feed and venting zones. This solution concerns processing of wet glass fiber material, in which context the glass fibers cannot be modified by a steam explosion.

The purpose of the method for the manufacturing of composite material according to the present invention is to provide a decisive improvement in terms of the above described problems and thus to substantially upgrade prior art of the field. In order to fulfill this purpose, the method according to the invention is principally characterized by what is presented in the characterizing part of the independent claim directed thereto.

The most important benefits gained by the method according to the invention notably include the simplicity and efficiency of functioning and device configurations used when applying the same, whereby the invention enables manufacturing of a composite material to be used e.g. as a so called intermediate product or straight in the manufacturing from compositions of which the manufacturing is not enabled by wet process or the dry mixing of which is too slow for economically efficient production due to the fluffiness of the ingredients. The ability to bond with polymers of dry grinded fibers is also weaker than the same of wet grinded. Thanks to the invention, it is furthermore possible to avoid a problem that comes about with traditional technology, such as with the use of e.g. a drying section, which is due to the softening point of the polymer used in the manufacturing of composite material. If the drying temperature in the manufacturing reaches this softening point, the plastic in the web starts to stick to the drying drums and stops the process.

Furthermore, it is to be pointed out that e.g. an intermediate product manufactured with wet web formation is slim and wide, e.g. 2 mm thick and 4 m wide as the thickness of the web is usually 0,05-4 % of the width of the web. In the wet extrusion according to the invention, the difference in the thickness and width of the manufactured composite material that is typical to a web does not exist.

When utilizing the invention, the wet mixture manufactured in the first phase is a mixture produced with e.g. a pulper, by mixing or with the like technique. In the mixture, different homogenizing apparatuses may also be used partly or fully, with which the size class of a micro- or nano level may be achieved for the particles. Also different kinds of foaming processes may be utilized in the mixture. After this, the suspension produced by pre-mixing and having a dry-matter concentration of e.g. 0,02-50 %, profitably 3-4 % is fed into the devolatilization process, in which, especially aided by a sufficiently high temperature and mechanical mixing, e.g. water and other gasifying and volatile matter are removed from the mixture by a steam explosion. Thus, the softening temperature of the plastics does not restrict the process, but the temperatures may be significantly higher than in drying arrangements like the ones used in paper machines. In addition, mechanical mixing causes the plastics, fibers and other possible chemical additives and/or colorants added alongside the mass to form a highly homogenous precompound, in which the dry-matter concentration is' e.g. 70-100 %, advantageously 70-90 %, which precompound is, after water is removed, fed into the last phase that is into the compounding process. The homogeneous precompound speeds up the formation of the mixture in the compounding that is in melt mixing, uses less energy therein and due to the homogeneity makes the forming of chemical bonds between the plastics, fibers and chemicals easier. The composite material manufactured in this way is a mixture, in which the dry-matter concentration is typically e.g. 90-100 %, almost 100 % at best.

Furthermore, the silanes are specifically used as the compatibility improving agent, silanes representing, as an example, liquid substances that may be mixed evenly to the cellulose specifically with the presence of water.

When a mixture produced in this manner is dried, the silane forms a covalent bond with the OH group of the cellulose fiber, because the free end of the silane, depending on the silane molecule, is compatible with different types of plastics. When melt mixing the dry cellulose treated with silane with a compatible plastic, the free end of the silane forms a chemical bond with the plastic, which improves the compatibility of the mixture, which furthermore improves the mechanical properties of the manufactured composite. Adding silane to dry cellulose is also possible, but then it may not be as efficiently utilized, because silane is only on the surface of dry cellulose-agglomerates.

Especially in paper machine environments, silane may be mixed evenly with water, cellulose, fibers and other chemicals, but the use of the same in an efficient manner is difficult, because typically over 50 % of the used water gets removed through the screen in the wet end of the paper machine into a screen trap and from there furthermore as waste water. Due to environmental reasons, reactive chemicals, such as silane, may not enter waste water. In the devolatilization process according to the invention, adding of silane takes place advantageously in a phase where e.g. running water does not exist anymore, but instead water dissolves as steam. In this case silane remains in the mixture and does not run out with water. The technical advantage therein is that the same technical power is achieved with a lesser amount. Thus, silane does not get into the cleaning apparatuses of waste water, either.

Furthermore, e.g. different cellulose-based, so called man-made celluloses, such as viscose, significantly improve a natural fiber composite, but do not form OH bonds that is they do not form webs. If the amount of such fibers in a mixture gets too high, it prevents web formation, whereby especially wet web formation is not an option. Instead, the present invention enables also typically 10-50 % of these kinds of fibers to be added into the production mixture.

Other advantageous embodiments of the method according to the invention are presented in the dependent claims directed thereto.

The invention will be discussed in detail in the subsequent specification with reference to the accompanying drawings, in which:
- in figure 1: is shown an exemplary process chart of the general functioning principle according to the invention,
- in figure 2: is shown a process chart alternative to the one presented in figure 1 of the general functioning principle according to the invention, and
- in figure 3: is shown furthermore an advantageous embodiment of the method according to the invention for the part of the devolatilization and compounding phase.

The invention relates to a method for the manufacturing of composite material according to claim 1.

Volatile substances, such as water or other decomposition products of cellulose, may easily be removed in the devolatilization process (PAtm, VAtm), because e.g. acetate acid that autocatalytically decomposes hemicellulose and lignin, boils at the temperature of 118ºC. As an especially advantageous embodiment of the method according to the invention, cellulose fiber is being utilized, which is hydroscopic by nature, which means that it strongly absorbs water and moisture in itself. Because plastics are hydrofobic, ergo water repelling, by nature, when mixing plastics and natural fibers with each other, it is important that most of the water is removed before mixing the plastics and natural fibers, because a mixing happening above the boiling point of water weakens the contact between the fibers and plastics and prevents forming of chemical bonds. In addition, water remaining in the structure causes porosity in the end product thus weakening its mechanical properties. Furthermore water degrades, ergo brakes, the structure of certain plastics by cutting the polymer chains shorter.

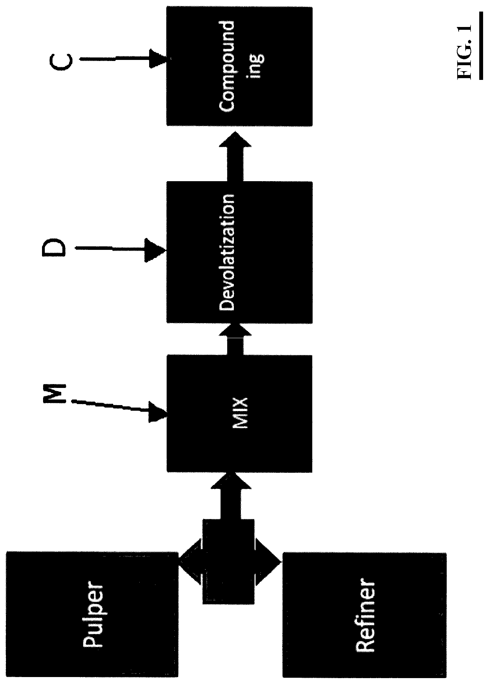

In figure 1 is presented an exemplary process chart of the general functioning principle of the invention, with reference to which, the wet mixture containing 41-99,8 % of water and being made in the previously described manner is fed straight into the devolatilization process D.

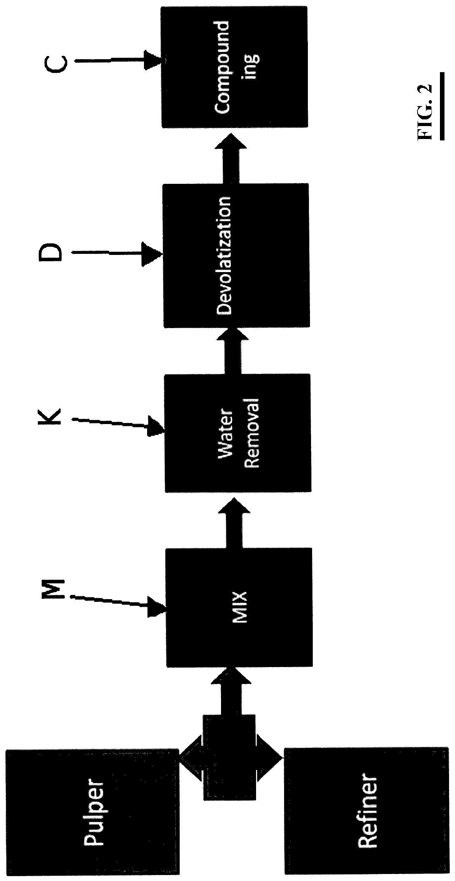

As an alternative embodiment of the method according to the invention, with reference to the exemplary process chart shown in figure 2, before the wet mixture is fed into the devolatilization process D, it is dried with mechanical predrying means K, such as with web and suction box arrangements; screw dryers and/or in the like manners.

Furthermore as an advantageous embodiment of the invention, the wet mixture is being processed in the devolatilization process D in an essentially higher temperature than the softening temperature of the plastic substance therein.

Furthermore as an advantageous embodiment of the invention, a precompound being formed from the wet mixture in the devolatilization process D is being led to a compounding process C, in which the precompound being homogenized in the devolatilization process is being melt mixed.

Furthermore a compatibility improving agent, such as silane to be mixed with water or the like, is being fed into the wet mixture in a phase of the devolatilization process D, wherein the wet mixture does not contain water in liquid form anymore.

In the situation like described above, silanes and the like chemicals, such as siloxanes, titanates, zirconates, isocyanates and different acids, such as maleic and acrylic acid, form a bond in two phases: a hydrogen bond, when the mixture contains water, and on the other hand, after the water has left, aided by heat a covalent bond. The use of these chemicals is not possible in wet web formation, because they disengage to the waste water through the screen.

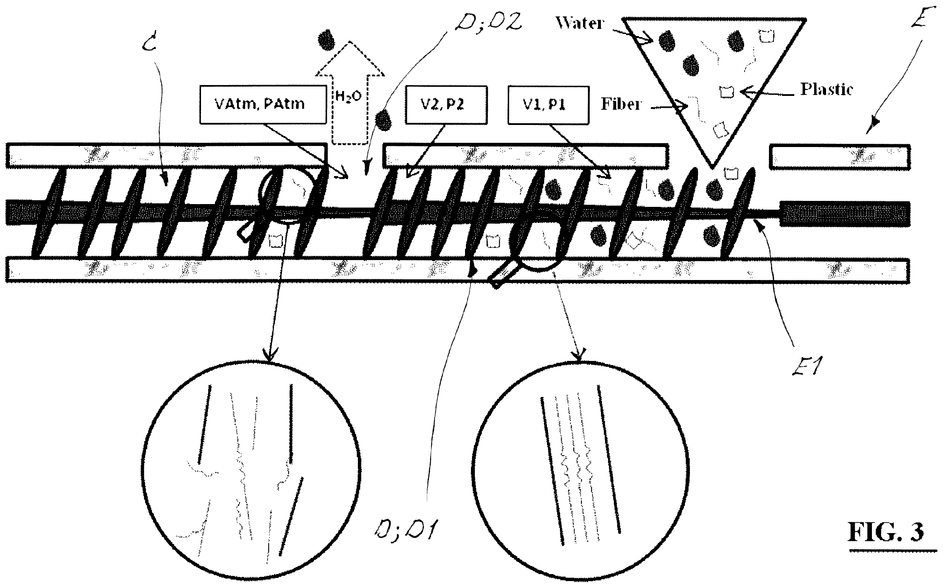

As an especially advantageous embodiment of the method according to the invention, especially with reference to figure 3, the devolatilization and compounding of the wet mixture is executed using a mixing device, such as an extruder E or like, which enables high pressures (>10 mP) and temperatures (>350ºC) to be used and changed even in a very speedy manner simply by changing the shape of the screw. In this way, water may be very efficiently removed from the inner structure of the fiber, but also the fiber may be worked into a more advantageous form regarding the melt mixing. In practice, these kinds of implementations are about preprocessing of fibers by so called "steam explosion".

In the method according to the invention, the wet mixture is advantageously handled in at least two phases in the devolatilization process D, when in the first phase D1 the wet mixture and the needed additives are fed into the basic volume V1 in the mixing device, such as in an extruder E as shown in figure 3. Powerful mixing of the wet mixture is executed in a sufficiently high temperature and steam pressure P1 (typically >180ºC, >1 MPa), wherein during premixing water/steam, fiber substance and plastic substance form a mixture, in which the plastic substance at least partly starts to melt.

In this context, the needed furthermore raised pressure P2 is achieved in the manner described above advantageously by decreasing the basic volume V1 in the extruder E, being used as the mixing device, between a screw E1 and a wall thereof into a decreased volume V2 by changing the shape of the screw that is its pitch.

After this, in a second phase D2 of the devolatilization process, the mixture being treated in the above described manner is being led further by using the screw E1 to a releasing space VAtm and in the same context profitably in an atmospheric pressure PAtm, wherein water in the mixture rapidly changes into steam and disengages from the fibers and plastic. With a rapid decline in pressure, water is also efficiently removed with an "explosion" from the deeper structures of the cellulose fiber, which opens up the structure of the cellulose, defibrillates it and raises the reactive surface area of the fiber as well as improves the homogeneity of the fiber-plastic mixture and enables a better chemical bonding between the same. In this context, the disengaged steam also gets removed from the atmospheric ventilation of the apparatus and the produced plastic-fiber mixture carries on for further processing thereof by the compounding zone E2 of the extruder E.

Depending on the quality of the wet mixture, there may, if needed, be several of the types of devolatilization phases as described above after each other, until desired humidity level is reached in the composite to be manufactured.

The natural fiber used in the method according to the invention may, as described above, be e.g. pure cellulose fiber. In addition or alternatively a part of the natural fiber may be microfibrillated cellulose fibers and/or nanocellulose fibers. Furthermore, it is possible to use e.g. micro- or nano sized cellulose fibers as a major part of the natural fibers. Furthermore, it is possible to utilize ligning free natural fibers and/or hemicellulose free fibers in the method. By using lignin free natural fibers, it is also possible to use colorants in the manufacturing of the composite in such a way that the desired color remains optimally also in the end product. Furthermore it is also possible to use delignified natural fibers. Dried forms of all the above mentioned fibers may be used, which are soaked before the process, and especially so called never dried -forms, which come straight from the pulping process or the like process. Fibers may also be functionalized, in which case there is a group formed on the surface thereof that has a better compatibility with the chosen plastic.

In the method according to the invention, the amount of plastic of the dry composite intermediate product may be e.g. 10-90 weight percent, advantageously 30-60 weight percent. The plastic is advantageously arranged in particle form, e.g. as micro granulates or powder, wherein the size of the particles may vary differing from the typical under -4000 µm size of e.g. granulates, flakes or other polymers to under -1000 µm. The diameter of the plastic particles may furthermore advantageously be e.g. under -500 µm, because small plastic particles drift between the fibers thus strengthening the structure of the intermediate composite product being formed as well as therefore also the structure of the end product. In addition, a plastic substance formed of small size particles has a larger specific surface area. The shape of the plastic particles may furthermore of any type, e.g. cubelike, elliptical, fiberlike or slatelike.

In the invention, it is also possible to use different plastic fibers that may melt, not melt or melt partly in the compounding process while forming chemical bonds with plastic or cellulose fiber. As an example of these may be mentioned PP-, PLA- or PET-fibers as well as fibers that are bicomponent by structure, in which the outer surface is reactive that can be e.g. maleicanhydride grafted olefin plastic or the like.

In the method according to the invention it is possible to use e.g. thermoplastic polymer, advantageously thermoplastic. On the other hand the plastic material used may be e.g. one of the following: polyethylene (PE), polypropylene (PP), ethylene/propylene-copolymer, polycarbonate (PC), polystyrene (PS), polyethylene terephthalate (PET), polyactic acid (PLA), polyhydroxybutyrate, acrylic nitrile/butadiene/styrene copolymer (ABS), styrene/acrylic nitrile copolymer (SAN), polyoxometalate (POM), biodegradable thermoplastic, starch-based thermoplastic, their derivatives and their mixtures. Alternatively almost any type of plastic suitable for the intended use may be used. In addition, plastic matter may be added into the process in the middle of its own polymerization process, if that is seen as advantageous for the manufacture of the composite. As an example of such may be mentioned among others unfinished forms of PLA or biobased plastics made from carbon dioxide.

The wet mixture used in the method according to the invention may be a water based mixture that contains water, natural fibers, plastic particles and a compatibility improving agent. On the other hand the wet mixture may be in the form of a solution, dispersion, suspension or the like.

A compatibility improving agent is an agent that improves the adhesion between plastic and natural fibers that is compatible and/or reactive with the reactive groups in plastic and natural fibers. Therefore, in the compatibility improving agent, there may be at least one reactive group that is compatible and/or reactive with the reactive groups of cellulose that is a hydrophilic substance and polymer that is a hydrophobic substance. The compatibility improving agent may also be e.g. an anhydride of maleic acid, a maleic acid grafted polymer, polybutadiene, polymethyl methacrylate (PMMA), EVA, a derivative of previously mentioned substances or a mixture of the same.

The compatibility improving polymers may furthermore be copolymers that contain groups that are compatible and/or reactive with hydrophilic natural fibers as well as groups that are compatible and/or reactive with hydrophobic plastics. Also other molecules that have the like qualities may be used in the compatibilization.

When utilizing the method, the compatibility improving agent may be in a powderlike, liquid and/or polymerlike form, the quantity of the same being typically under 5 weight percent or in some embodiments furthermore under 3 weight percent of dry matter.

The composite material to be manufactured with the method may contain one or more additives, such as starch, fillers, surface reactive materials, retention materials, dispergation materials, foam inhibitors and mixtures thereof. In the method according to the invention all ingredients needed may be added into the liquid manufacturing mixture, wherein the intermediate composite product contains ingredients needed in the applications of further processing or end product embodiments immediately after compounding.

In the method according to the invention, the wet mixture may be predried K by removing liquid therefrom by e.g. squeezing and/or drying, which may be executed in manners known from the field of manufacturing e.g. os paper pulp slurry or cellulose pulp slurry by using any apparatus components known as such in the field.

As shown in the process chart in the appended figure 2, the mass produced with e.g. a grinder or a pulper is being led into a mixing device M, in which other chemistry to be added into the wet mixture is added. Dry matter concentration in the mixing device may be 0,02-50 %, advantageously 3-4 %. In the next phase liquid, such as water, is being removed from the wet mixture, after which dry matter concentration may be typically e.g. 30-50 %, advantageously 50-70 %. After the compounding phase C to be carried out at the end, the dry matter concentration is 90-100 %, almost 100 % at best.

It is clear that the invention is not limited to the embodiments shown or described above, but instead, on the grounds of the basic principles of the invention, it may be varied in various ways depending on e.g. desired properties of the composite material being manufactured at any given time etc. Therefore in the process according to the invention, it is possible to use any substitutive liquid mediums instead of water and, respectively, instead of silane, any other suitable compatibility improving agent. Furthermore natural fiber used in the invention may be recycled fiber or reuse fiber. Therefore natural fiber may be e.g. wood-, sisal-, jute-, hemp-, flax-, cotton-, straw- fiber or fiber from another annual plant and their mixtures. On the other hand the natural fiber may be mechanically dried fiber, dissolving pulp fiber, sulphite pulp fiber, sulphate pulp fiber or viscose fiber.

## Claims

1. Method for the manufacturing of composite material, which composite material comprises at least a natural fiber substance, such as wood-derived fibers, wood-derived mechanically fiberized fibers, cellulose fiber made from natural fibers and mixtures thereof, a plastic based substance, such as plastic particles having a diameter of less than -4000 µm, plastic fibers, and a substance improving compatibility between the said natural fiber substance and the said plastic based substance, whereby the composite material is being manufactured by mixing (M) the said substances with each other, and thereafter by mechanically pressing and/or by drying with heat the formed mixture in order to remove liquid, such as water, therefrom, **characterized in that**, a wet mixture with 41-99,8 % water is being formed at least from a natural fiber substance, a plastic based substance and a compatibility improving agent, whereby in order to manufacture a composite material, having an internal network structure that keeps material together by chemical bonds between the plastic based substance and the natural fiber substance, the wet mixture is being fed into a devolatilization process (D) in an extruder (E), in which substance in liquid form and other gasifying volatile substances or at least a main part thereof are being removed by powerful changes in pressure [V2, P2] -) [VAtm, PAtm], heat and mechanical mixing, as well as the structure of the natural fiber substance, such as cellulose fiber, being modified if needed, and steam explosion is carried out.

2. Method according to claim 1, **characterized in that**, the wet mixture is being processed in the devolatilization process (D) in a higher temperature than the softening temperature of the plastic substance therein.

3. Method according to claim 1 or 2, **characterized in that**, a precompound being formed from the wet mixture in the devolatilization process (D) is being led to a compounding process (C), in which the precompound being homogenized in the devolatilization process is being melt mixed.

4. Method according to any of the preceding claims 1-3, **characterized in that**, prior to the feeding of the wet mixture to the devolatilization process (D), it is being dried by mechanical predrying means (K), such as by web and suction box arrangments and/or screw driers.

5. Method according to any of the preceding claims 1-4, **characterized in that**, the wet mixture is being fed into the extruder (E) acting as a mixing device for carrying out a first phase (Dl) of the devolatilization process, wherein the wet mixture is being mixed in an elevated temperature and steam pressure (Pi), whereby water/steam, fiber substance and plastic substance form a mixture, in which the plastic substance at least partly starts to melt.

6. Method according to claim 5, **characterized in that**, a further elevated pressure in the first phase (Dl) of the devolatilization process is being achieved by decreasing the basic volume (Vl) in the extruder (E) between a screw (El) and a wall thereof into a decreased volume (V2) by changing the shape of the screw, such as its pitch or in a corresponding manner.

7. Method according to claim 5 or 6, **characterized in that**, in a second phase (D2) of the devolatilization process, the mixture being devolatized is being led to a releasing space preferably in an atmospheric pressure (PAtm, VAtm), in order to change the water in the mixture rapidly into steam and for disengaging the same from the fiber and plastic substances, whereafter the formed mixture is being transmitted furthermore to a compounding zone (C) of the mixing device for further processing thereof.

## Patentansprüche

1. Verfahren zur Herstellung eines Verbundmaterials, das mindestens einen natürlichen Faserstoff, wie aus Holz gewonnene Fasern, aus Holz gewonnene, mechanisch zerfaserte Fasern, aus natürlichen Fasern hergestellte Zellulosefasern und Mischungen daraus, einen Stoff auf Kunststoffbasis, wie Kunststoffpartikel mit einem Durchmesser von weniger als -4000 µm, Kunststofffasern und einen Stoff, der die Verträglichkeit zwischen dem Naturfaserstoff und dem Stoff auf Kunststoffbasis verbessert, enthält, wobei das Verbundmaterial durch Vermischen (M) der einzelnen Stoffe miteinander und anschließendes mechanisches Pressen und/oder thermisches Trocknen der gebildeten Mischung, um Flüssigkeiten, wie beispielsweise Wasser, daraus zu extrahieren, hergestellt wird, **dadurch gekennzeichnet, dass** aus mindestens einem Naturfaserstoff, einem Stoff auf Kunststoffbasis und einem die Verträglichkeit verbessernden Mittel eine nasse Mischung mit einem Wassergehalt von 41-99,8 % gebildet wird, die zwecks Herstellung eines Verbundmaterials mit einer inneren Netzwerkstruktur, die das Material durch chemische Bindungen zwischen dem kunststoffbasierten Stoff und dem Naturfaserstoff zusammenhält, einem Entgasungsprozess (D) in einem Extruder (E) zugeführt wird, in dem der Stoff in flüssiger Form und andere vergasende flüchtige Stoffe oder zumindest ein Großteil davon durch starke Druckveränderungen [V2, P2] 〉 [VAtm, PAtm], Wärme und mechanisches Vermischen extrahiert werden und die Struktur des Naturfaserstoffs, wie beispielsweise der Zellulosefaser, bei Bedarf verändert und eine Dampfexplosion durchgeführt wird.

2. Verfahren nach Anspruch 1, **dadurch gekennzeichnet, dass** die nasse Mischung im Entgasungsprozess (D) bei einer höheren Temperatur als der Erweichungstemperatur des Kunststoffs verarbeitet wird.

3. Verfahren nach Anspruch 1 oder 2, **dadurch gekennzeichnet, dass** ein im Entgasungsprozess (D) aus der nassen Mischung gebildetes Precompound einem Compoundierprozess (C) zugeführt wird, in dem das im Entgasungsprozess homogenisierte Precompound schmelzgemischt wird.

4. Verfahren nach einem der vorhergehenden Ansprüche 1 bis 3, **dadurch gekennzeichnet, dass** die nasse Mischung vor der Zuführung zum Entgasungsprozess (D) durch mechanische Vortrocknungsmittel (K), wie beispielsweise durch Rippen- und Saugkastenanordnungen und/oder Schneckentrockner, getrocknet wird.

5. Verfahren nach einem der vorhergehenden Ansprüche 1-4, **dadurch gekennzeichnet, dass** die nasse Mischung in den Extruder (E) eingespeist wird, der als Mischvorrichtung zur Durchführung einer ersten Phase (Dl) des Entgasungsprozesses dient, wobei die nasse Mischung bei erhöhter Temperatur und erhöhtem Dampfdruck (Pi) gemischt wird, wodurch Wasser/Dampf, Faserstoff und Kunststoff eine Mischung bilden, in welcher der Kunststoff zumindest teilweise zu schmelzen beginnt.

6. Verfahren nach Anspruch 5, **dadurch gekennzeichnet, dass** ein weiterer Druckanstieg in der ersten Phase (Dl) des Entgasungsprozesses dadurch erreicht wird, dass das Grundvolumen (Vl) im Extruder (E) zwischen einer Schnecke (El) und einer Wand desselben durch Veränderung der Form der Schnecke, wie beispielsweise ihrer Steigung, oder in entsprechender Weise in ein vermindertes Volumen (V2) verringert wird.

7. Verfahren nach Anspruch 5 oder 6, **dadurch gekennzeichnet, dass** das Entgasungsgemisch in einer zweiten Phase (D2) des Entgasungsprozesses, vorzugsweise bei Atmosphärendruck (PAtm, VAtm), in einen Freisetzungsraum geleitet wird, um das Wasser in dem Gemisch schnell in Dampf umzuwandeln und diesen von den Faser- und Kunststoffen zu lösen, woraufhin das gebildete Gemisch zur weiteren Verarbeitung zu einer Compoundierzone (C) der Mischvorrichtung weitergeleitet wird.

## Revendications

1. Procédé pour la fabrication d'un matériau composite, lequel matériau comprend au moins une substance en fibre naturelle telle que fibre de bois, fibre de bois défibrée par procédé mécanique, fibre de cellulose obtenue à partir de fibres naturelles et de mélanges de ces fibres, une substance à base de plastique telle que des particules de plastique ayant un diamètre inférieur à -4000 µm, des fibres plastiques et une substance améliorant la compatibilité entre ladite substance en fibres naturelles et ladite substance à base de plastique, par lequel le matériau composite est confectionné en mélangeant (M) lesdites substances entre elles, puis en comprimant de façon mécanique et/ou en séchant à la chaleur le mélange formé afin d'en extraire les liquides tels que l'eau, **caractérisé par le fait qu'**un mélange humide contenant 41 à 99,8 % d'eau est constitué au moins à partir d'une substance en fibre naturelle, d'une substance à base de plastique et d'un agent améliorant la compatibilité, par lequel, pour fabriquer un matériau composite ayant une structure de réseau interne gardant le matériau homogène au moyen de liaisons chimiques entre la substance à base de plastique et la substance en fibre naturelle, le mélange humide est introduit dans un processus d'extraction des matières volatiles (D) dans une extrudeuse (E), dans laquelle la substance liquide et d'autres substances volatiles gazéifiantes ou au moins la majeure partie de ces substances sont extraites par de puissants changements de pression [V2, P2] -〉 [VAtm, PAtm], la chaleur et le mélange mécanique, et où la structure de la substance en fibre naturelle, comme la fibre de cellulose, est au besoin modifiée et une explosion de vapeur est effectuée.

2. Procédé décrit dans la revendication 1, **caractérisé par le fait que** le mélange humide est traité dans le processus d'extraction des matières volatiles (D) à une température supérieure à la température d'amollissement de la substance en plastique qui s'y trouve.

3. Procédé décrit dans la revendication 1 ou 2, **caractérisé par le fait qu'**un précomposé constitué à partir du mélange humide dans le processus d'extraction des matières volatiles (D) est introduit dans un processus de composition (C), où le précomposé homogénéisé dans le processus d'extraction des matières volatiles est mélangé par fusion.

4. Procédé décrit dans une quelconque des revendications précédentes 1 à 3, **caractérisé par le fait qu'**avant d'introduire le mélange humide dans le processus d'extraction des matières volatiles (D), il est déshydraté par des moyens mécaniques de préséchage (K), tels que des ensembles de bandes et boîte d'aspiration et/ou séchoirs à vis.

5. Procédé décrit dans une quelconque des revendications précédentes 1 à 4, **caractérisé par le fait que** le mélange humide est introduit dans l'extrudeuse (E) servant de dispositif mélangeur pour l'exécution d'une première phase (Dl) du processus d'extraction des matières volatiles, par lequel le mélange humide est mélangé à une température et une pression de vapeur (Pi) élevées, où l'eau/vapeur, la substance en fibre et la substance en plastique constituent un mélange dans lequel la substance en plastique commence au moins partiellement à fondre.

6. Procédé décrit dans la revendication 5, **caractérisé par le fait qu'**une pression davantage élevée au cours de la première phase (Dl) du processus d'extraction des matières volatiles est obtenue par réduction du volume de base (Vl) dans l'extrudeuse (E) entre une vis (El) et une paroi dans un volume réduit (V2) en modifiant la forme de la vis, comme son écartement ou d'une façon correspondante.

7. Procédé décrit dans la revendication 5 ou 6, **caractérisé par le fait que** dans une seconde phase (D2) du processus d'extraction des matières volatiles, le mélange rendu non volatil est conduit dans un espace de dégagement de préférence à une pression atmosphérique (PAtm, VAtm), afin de convertir rapidement l'eau du mélange en vapeur et pour séparer cette vapeur des substances en fibre et en plastique, après quoi le mélange constitué est de plus transféré dans une zone de malaxage (C) du dispositif mélangeur pour la suite de son traitement.
